# EUROPEAN PATENT APPLICATION

(11) **EP 4 517 889 A1**
(43) Date of publication of application: **05.03.2025**
(21) Application number: 22940366.2
(22) Date of filing: 01.07.2022
(51) Int. Cl.: H01M 8/0668, H01M 8/0612, H01M 8/0656, C01B 3/34, B01D 53/62, B01D 53/78, B01D 53/79, C25B 1/02

(54) **CARBON DIOXIDE CAPTURE AND CARBON RESOURCE UTILIZATION SYSTEM, FOR FUEL CELL, USING BOIL-OFF GAS GENERATED FROM LIQUEFIED NATURAL GAS**

(30) Priority: 27.04.2022 KR 20220051951
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/009517
(87) International publication number: WO 2023/210872

(57) **Abstract**

A carbon dioxide capture and carbon resource utilization system, for a fuel cell, using boil-off gas (BOG) generated from liquefied natural gas (LNG) of the present invention comprises: a liquefied natural gas storage which stores liquefied natural gas therein; a hydrocarbon reformer which generates a gas mixture containing hydrogen and carbon dioxide by reacting boil-off gas generated from the liquefied natural gas storage with water introduced from the outside; a fuel cell which receives hydrogen generated from the hydrocarbon reformer to generate electric power; a reactor which receives carbon dioxide generated from the hydrocarbon reformer to react the carbon dioxide with a basic alkali mixture solution, thereby capturing carbon dioxide, collects a reaction product containing the captured carbon dioxide, and separates a carbon dioxide reaction product and a waste solution from the reaction product; and a hydrogen generator which generates hydrogen by using the carbon dioxide reaction product separated from the reactor and supplies the generated hydrogen to the fuel cell.

## Description

### Technical Field

The present disclosure relates to a carbon dioxide capture and carbon resource utilization system, for a fuel cell, using boil-off gas generated from liquefied natural gas. More particularly, the present disclosure relates a carbon dioxide capture and carbon resource utilization system, for a fuel cell, using boil-off gas generated from liquefied natural gas, the system being capable of realizing an environmentally safe and pollutionfree electricity generation system.

### Background Art

Recently, as climate change has emerged as a global issue, responses of each country are also becoming active, and major countries are introducing various policies for reducing greenhouse gases. As the Kyoto Protocol officially enters into force, Korea is in a situation in which it is impossible to avoid the obligation to reduce greenhouse gas emissions. However, the current efforts are insufficient to reduce the trend of increasing greenhouse gas emissions.

In this situation, interest in utilizing new and renewable energy, improving energy efficiency, and reducing carbon dioxide are increasing more than ever.

Accordingly, a fuel cell is emerging as a prominent new and renewable energy. A fuel cell is a battery that directly converts chemical energy generated by electrical oxidation of chemical substances such as hydrogen, carbon monoxide, methanol, ethanol, glucose, or other hydrocarbons into electrical energy. Since emissions of nitrogen oxides (NOx) and sulfur oxides (SOx) are significantly reduced when the fuel cell is used, the fuel cell has an eco-friendly advantage over a conventional electric power generation facility using a fossil fuel.

However, in the currently available fuel cell technology, a liquid fuel containing hydrogen is used, and after the liquid fuel is converted into a gas mixture of hydrogen and carbon dioxide by a reformer, only hydrogen is extracted from the gas mixture and is input for energy supply of the fuel cell, but carbon dioxide gas is discharged to the outside.

Therefore, various alternatives have been proposed to reduce the emission of carbon dioxide, which is the main cause of greenhouse gases, apart from hydrogen supplied to the fuel cell, but the development of a technology to reduce carbon dioxide generated from the fuel cell is still insufficient.

In addition, as the demand for the research and development of alternative energy due to global warming and the depletion of fossil fuels is continuously increasing, hydrogen energy is attracting attention as the only practical alternative to solving environmental and energy problems.

Accordingly, the importance of the water electrolysis technology that uses electric energy to produce hydrogen from pure water is emerging.

The conventional water electrolysis technology basically includes an external power source, an anode, and a cathode, and has a structure in which oxygen (O₂) is generated by oxidation at the anode and hydrogen (H₂) is generated by reduction at the cathode when electricity is applied from the external power source. That is, the conventional water electrolysis technology may be viewed as a process of electrolyzing water and decomposing water into hydrogen and oxygen.

At this time, in a cathode of the conventional water electrolysis technology, OH-radicals are generated as a reaction product during a reduction process, and water (H₂O) is generated since OH- radicals easily recombine with oxygen (O₂) generated through oxidation at an anode and hydrogen (H₂) generated through reduction at the cathode, so that there is a problem the hydrogen (H₂) generation efficiency is reduced as a result.

### Disclosure

### Technical Problem

Accordingly, the present disclosure has been made keeping in mind the above problems occurring in the related art, and an objective of the present disclosure is to provide a system for reducing carbon dioxide that is generated after reforming of a fuel input to a fuel cell.

In addition, another objective of the present disclosure is to provide a carbon dioxide capture and carbon resource utilization system, for a fuel cell, using boil-off gas generated from liquefied natural gas, the system being capable of converting carbon dioxide into other useful materials while carbon dioxide is removed at the same time by capturing carbon dioxide in a flue gas and converting carbon dioxide into a carbon resource by using a basic alkali mixture solution.

In addition, still another objective of the present disclosure is to provide a carbon dioxide capture and carbon resource utilization system, for a fuel cell, using boil-off gas generated from liquefied natural gas, the system being capable of utilizing carbon dioxide to the maximum extent compared to that of a conventional technology and being also capable of increasing the power generation efficiency of the fuel cell since hydrogen is generated by utilizing a carbon dioxide reaction product converted into a carbon resource and the generated hydrogen is supplied to the fuel cell again.

In addition, yet another objective of the present disclosure is to provide a carbon dioxide capture and carbon resource utilization system, for a fuel cell, using boil-off gas generated from liquefied natural gas, the system being capable of generating hydrogen more than that of a conventional water electrolysis technology since a carbon dioxide reaction product converted into a carbon resource is utilized as an electrolyte.

The technical problems to be solved by the present disclosure are not limited to the above-mentioned problems, and other problems which are not mentioned will be clearly understood by those skilled in the art from the following description.

### Technical Solution

In order to achieve the above objectives, according to an aspect of the present disclosure, there is provided a carbon dioxide capture and carbon resource utilization system, for a fuel cell, using boil-off gas (BOG) generated from liquefied natural gas, the system including: a liquefied natural gas storage configured to store liquefied natural gas (LNG); a hydrocarbon reformer configured to react boil-off gas generated from liquefied natural gas storage with water input from outside, thereby generating a gas mixture containing hydrogen and carbon dioxide; a fuel cell configured to generate electric power by receiving hydrogen generated from the hydrocarbon reformer; a reactor configured to capture carbon dioxide by receiving carbon dioxide generated from the hydrocarbon reformer and reacting carbon dioxide with a basic alkali mixture solution, configured to collect a reaction product containing the captured carbon dioxide, and configured to separate a carbon dioxide reaction product and a waste solution from the reaction product; and a hydrogen generator configured to generate hydrogen by using the carbon dioxide reaction product separated from the reactor and configured to supply the generated hydrogen to the fuel cell.

In addition, according to an aspect, a hydrogen charging station for transmitting and storing hydrogen that remains after being supplied to the fuel cell may be further provided between the hydrocarbon reformer and the hydrogen generator.

In addition, according to an aspect, the hydrocarbon reformer may include: an extraction mechanism for extracting or separating hydrogen and carbon dioxide from the gas mixture; and a transfer mechanism for supplying hydrogen extracted from the extraction mechanism to the fuel cell and for supplying carbon dioxide separated from hydrogen from the generated gas mixture to the reactor.

In addition, according to an aspect, the reactor may include: a mixer configured to supply the basic alkali mixture solution; an absorption column configured to capture carbon dioxide by reacting the basic alkali mixture solution supplied from the mixer with carbon dioxide transferred from the hydrocarbon reformer; a separator configured to collect the reaction product containing carbon dioxide captured in the absorption column and configured to separate the carbon dioxide reaction product and the waste solution from the reaction product; and a carbon resource storage configured to store the separated carbon dioxide reaction product for utilizing the separated carbon dioxide reaction product.

In addition, according to an aspect, the mixer may be configured to generate the basic alkali mixture solution by mixing a basic alkaline solution supplied from a basic alkaline solution storage with water supplied from a water source.

In addition, according to an aspect, the basic alkaline solution and water may be mixed in a ratio of 1:1 to 1:5.

In addition, according to an aspect, an average pH of the basic alkali mixture solution may be pH 12 to pH 13.5.

In addition, according to an aspect, the basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an aspect, the absorption column may be configured to supply the basic alkali mixture solution from the mixer by using a plurality of nozzles mounted on an upper portion of the absorption column.

In addition, according to an aspect, the basic alkali mixture solution may be input by being adjusted through a valve in the mixer when a level of the basic alkali mixture solution in the absorption column is lowered to less than 90%, and inputting of the basic alkali mixture solution may be stopped and, at the same time, a basic alkaline solution and water may be mixed until a pH of the basic alkali mixture solution becomes pH 12 to pH 13.5 when the level of the basic alkali mixture solution becomes 100%.

In addition, according to an aspect, the absorption column may be configured to capture carbon dioxide by reacting the basic alkali mixture solution supplied from the mixer with carbon dioxide which is transferred from the hydrocarbon reformer and in which micro bubbles are formed by allowing carbon dioxide to pass through a bubbler formed on a lower portion of the absorption column.

In addition, according to an aspect, in the absorption column, carbon dioxide transferred from the hydrocarbon reformer may be atomized into micro bubbles by passing through a mesh net mounted on a lower portion of the absorption column, the basic alkali mixture solution supplied inside the absorption column from the mixer through a pipe may be sprayed upwardly as a fountain shape through the plurality of nozzles which is mounted on a first side of the pipe and which is disposed to be spaced apart from each other at a predetermined distance and then the basic alkali mixture solution may be atomized into micro droplets, and carbon dioxide may be captured as the basic alkali mixture solution that is atomized reacts with carbon dioxide that is atomized, the pipe being mounted such that the pipe crosses the upper portion of the absorption column.

In addition, according to an aspect, an agitator for promoting a reaction between carbon dioxide and the basic alkali mixture solution by increasing fluidity of the atomized carbon dioxide and the atomized basic alkali mixture solution may be further provided between the mesh net and the pipe.

In addition, according to an aspect, a micro droplet screen for allowing micro droplets in the atomized basic alkali mixture solution having a size smaller than a predetermined size to pass therethrough may be further provided between the mesh net and the pipe.

In addition, according to an aspect, the reactor may include: a monitoring part configured to monitor a level and a pH of the basic alkali mixture solution in the absorption column; and a controller configured to adjust a supply amount of the basic alkali mixture solution by the monitoring part.

In addition, according to an aspect, the carbon dioxide reaction product may include sodium carbonate (Na₂CO₃) or sodium bicarbonate (NaHCO₃).

In addition, according to an aspect, the hydrogen generator may include a water electrolysis cell configured to generate hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reaction product separated from the reactor.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, carbon dioxide generated after reforming of a fuel input to the fuel cell is performed is captured and converted into a carbon resource, so that carbon dioxide may be removed during reforming of the fuel cell and sodium carbonate or sodium bicarbonate, which is other useful materials, may be manufactured at the same time.

In addition, according to an embodiment of the present disclosure, hydrogen is generated by using the carbon dioxide reaction product converted into the carbon resource, and the generated hydrogen is supplied to the fuel cell again, so that there is an effect that the power generation efficiency of the fuel cell is increased.

In addition, according to an embodiment of the present disclosure, there is an effect that hydrogen may be further generated compared to that of the conventional water electrolysis technology since the carbon dioxide reaction product converted into the carbon resource is utilized as the electrolyte.

### Description of Drawings

FIG. 1 is a conceptual view schematically illustrating a carbon dioxide capture and carbon resource utilization system, for a fuel cell, using boil-off gas generated from liquefied natural gas according to an embodiment of the present disclosure.
FIG. 2 is a schematic view illustrating a reactor according to an embodiment of the present disclosure.
FIG. 3 is a conceptual view illustrating a hydrogen generator according to an embodiment of the present disclosure.
FIG. 4 is an enlarged view illustrating the B part illustrated in FIG. 3.
FIG. 5 is an enlarged view illustrating the A part illustrated in FIG. 3.
FIG. 6 is a schematic view illustrating an inner portion of an absorption column of the reactor according to another embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

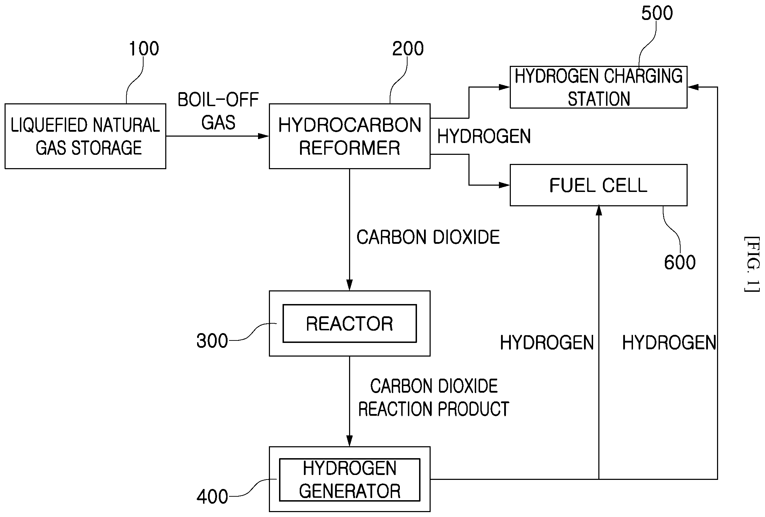

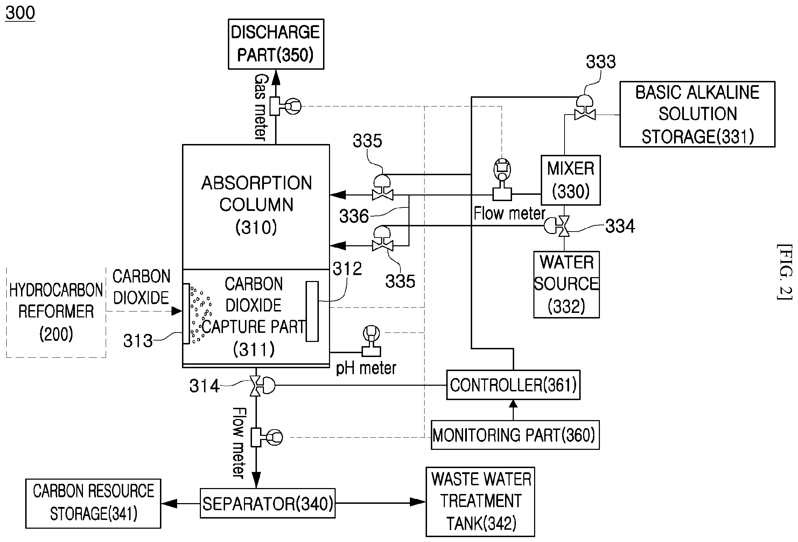

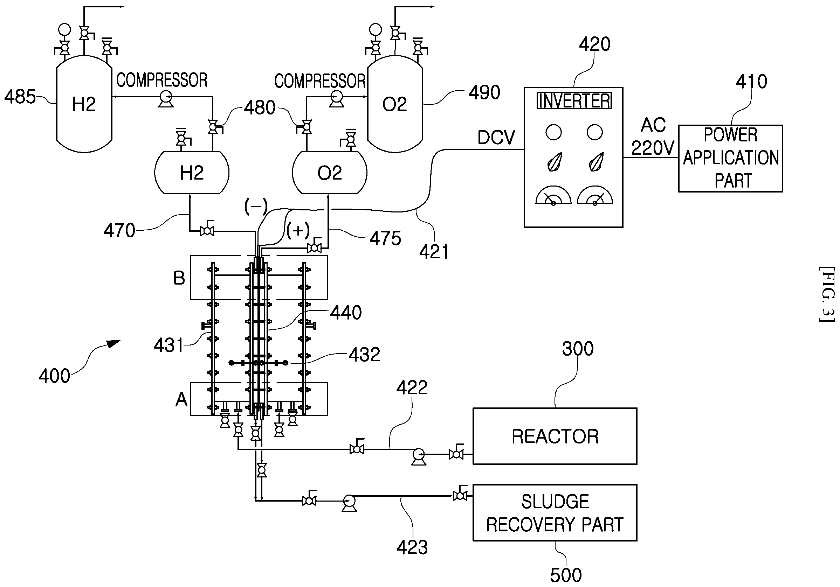

FIG. 1 is a conceptual view schematically illustrating a carbon dioxide capture and carbon resource utilization system, for a fuel cell, using boil-off gas generated from liquefied natural gas according to an embodiment of the present disclosure, FIG. 2 is a schematic view illustrating a reactor 300 according to an embodiment of the present disclosure, and FIG. 3 is a conceptual view illustrating a hydrogen generator 400 according to an embodiment of the present disclosure.

Hereinafter, a carbon dioxide capture and carbon resource utilization system, for a fuel cell, using boil-off gas generated from liquefied natural gas according to an embodiment of the present disclosure will be described in more detail with reference to the following drawings.

Referring to FIG. 1, the carbon dioxide capture and carbon resource utilization system, for the fuel cell, using boil-off gas generated from liquefied natural gas according to an embodiment of the present disclosure may include a liquefied natural gas storage 100, a hydrocarbon reformer 200, the reactor 300, the hydrogen generator 400, a hydrogen charging station 500, and a fuel cell 600.

Firstly, as a component of the present disclosure, the fuel cell 600 requires hydrogen to generate electrical power, and may produce water. Specifically, the fuel cell 600 is configured to perform power generation by a coupling reaction of hydrogen and oxygen in air, and may be formed of an anode, a cathode, and an electrolyte.

In addition, according to a chemical composition of a stack that causes a chemical reaction between hydrogen and oxygen, the fuel cell 600 may be one of a polymer electrolyte fuel cell (PEFC), a phosphoric acid fuel cell (PAFC), a molten carbonate fuel cell (MCFC), and a solid oxide fuel cell (SOFC).

Meanwhile, currently available fuel cell technologies generally use a liquid fuel containing a hydrocarbon, such as diesel, gasoline, methanol, natural gas, and so on.

As another component of the present disclosure, the liquefied natural gas storage 100 stores liquefied natural gas (LNG) in a liquefied state in order to increase the storage capacity of natural gas.

The liquefied natural gas stored in the liquefied natural gas storage 100 may have a temperature of minus 163 degrees Celsius. Therefore, as the liquefied natural gas storage 100, a conventional LNG storage tank is designed and constructed by using a material capable of withstanding an ultra-low temperature.

However, a large amount of Boil-Off gas (BOG) is continuously generated in the liquefied natural gas storage 100, and it is known that the boil-off gas is generated by heat input through the liquefied natural gas or a pipe, or by a convection phenomenon due to liquid stratification.

Since the LNG storage tank may explode due to the large amount of boil-off gas generated in this manner, boil-off gas is extracted by a compressor, is re-liquefied, and is returned to the storage tank again in order to prevent explosion. When the amount of boil-off gas is excessive, boil-off gas is released outside the storage tank through a pressure control valve.

As described above, in the present disclosure, there is provided a carbon capture and carbon resource utilization technology for coping with global warming by capturing carbon dioxide and generating hydrogen at the same time by using boil-off gas that is that is a type of greenhouse gas discarded from the liquefied natural gas storage 100 and then supplying the generated hydrogen to the fuel cell and so that power is generated.

As another component of the present disclosure, the hydrocarbon reformer 200 is connected to the liquefied natural gas storage 100 and is configured to react water supplied from the outside with boil-gas generated in the liquefied natural gas storage 100, i.e., with vaporized LNG mainly containing methane, thereby generating a gas mixture containing hydrogen and carbon dioxide. Furthermore, the hydrocarbon reformer 200 may be configured to extract hydrogen from the generated gas mixture and to supply hydrogen to the fuel cell 600.

Specifically, the hydrocarbon reformer 200 may be configured to react a hydrocarbon such as methane (CH₄) with water vapor so that a gas mixture containing hydrogen and carbon dioxide as shown in the following Formula 1 is generated.

<Formula 1> CH₄ + 2H₂O → CO₂ + 4H₂

In the chemical reaction described above, the ratio of hydrogen and carbon dioxide in terms of an amount of substance is 4:1, but about 5 kg of carbon dioxide is emitted when 1 kg of hydrogen is produced. That is, since the amount of carbon dioxide is larger than the amount of hydrogen produced according to the chemical reaction, a method for reducing carbon dioxide is required.

To this end, the hydrocarbon reformer 200 may include an extraction mechanism for extracting or separating hydrogen and carbon dioxide from the gas mixture, and may include a transfer mechanism for supplying hydrogen extracted from the extraction mechanism to the fuel cell 600 and for supplying carbon dioxide separated from hydrogen from the gas mixture to the reactor 300.

The reactor 300 is connected to the hydrocarbon reformer 200, may be configured to receive carbon dioxide generated from the hydrocarbon reformer 200 and to react carbon dioxide with a basic alkali mixture solution so that carbon dioxide is captured, may be configured to collect a reaction product containing the captured carbon dioxide, and may be configured to separate a carbon dioxide reaction product and a waste solution from the reaction product, thereby being capable of capturing carbon dioxide and converting carbon dioxide into a carbon resource.

To this end, as illustrated in FIG. 2, the reactor 300 according to an embodiment of the present disclosure is a system for capturing carbon dioxide supplied from the hydrocarbon reformer 200 by using a basic alkaline solution, and may include an absorption column 310, a carbon dioxide capture part 311, a mixer 330, a separator 340, a carbon resource storage 341, and a discharge part 350.

The absorption column 310 may refer to a facility, a building, equipment, and so on capturing carbon dioxide. In addition, the carbon dioxide capture part 311 positioned on a lower end of the absorption column 310 is a portion of the absorption column 310, and may refer to a portion where carbon dioxide is captured by bubbling a flue gas.

The absorption column 310 includes the carbon dioxide capture part 311 at the lower end of the absorption column 110, and is configured to capture carbon dioxide by reacting a basic alkali mixture solution with carbon dioxide (carbon dioxide micro bubbles).

A nozzle is mounted on an upper portion of the absorption column 310, a basic alkali mixture solution is sprayed inside the absorption column 310 through the nozzle from the mixer 330, and the basic alkali mixture solution is collected in the carbon dioxide capture part 311 positioned at the lower end of the absorption column 510.

At the same time as the basic alkali mixture solution is sprayed, carbon dioxide supplied from the flue gas emission source 320 passes through a bubbler 313 in the carbon dioxide capture part 311 at the lower portion of the absorption column 310 so that carbon dioxide in which micro bubbles are formed is supplied, and the basic alkali mixture solution and carbon dioxide micro bubbles react with each other within the carbon dioxide capture part 311, so that carbon dioxide is captured.

When carbon dioxide reacts with the basic alkali mixture solution, the micro bubbles are formed while carbon dioxide passes through the bubbler 313 having fine holes formed on an outlet of the flue gas emission source 320.

As carbon dioxide supplied from the hydrocarbon reformer 200 passes through the flue gas emission source 320 and passes through the bubbler 313, the bubbler 113 may form micro bubbles in the carbon dioxide. Furthermore, the smaller the size of micro bubbles, the larger the reaction area of a flue gas and an alkaline solution, so that the carbon dioxide capture ability may be increased. For example, the micro bubbles may refer to bubbles which have a size about equal to or less than 50 *µ*m and which exist in an aqueous solution.

In addition, the absorption column 310 may include a level indicator 312 inside the absorption column 310, so that a level of a solution in the absorption column 410 is capable of being detected.

The nozzle may include a plurality of nozzles, and may be formed of at least one stage. The nozzle is connected to the mixer 330, and may supply a basic alkali mixture solution from the mixer 330.

The absorption column 310 may be configured in series, in parallel, or in a series and parallel complex arrangement.

For example, the absorption columns 310 may be arranged in series when the flow velocity of the flue gas is high. When carbon dioxide unreacted due to a high flow velocity is discharged from the absorption columns, the absorption columns may be mounted in series so as to capture the unreacted carbon dioxide.

In addition, for example, the absorption columns 310 may be arranged in parallel when the flow rate of the flue gas is large. When the flow rate of the exhaust gas exceeds the amount that the absorption column can capture, the amount of carbon dioxide that can be captured may be increased by arranging the absorption column in parallel.

The flue gas emission source 320 may utilize carbon dioxide generated by hydrocarbon reforming of the hydrocarbon reformer 200.

The mixer 330 mixes a basic alkaline solution supplied from a basic alkaline solution storage 331 with water supplied from a water source 332, and supplies the mixture to the nozzle of the absorption column 310.

A basic alkali mixture solution in which the basic alkaline solution and water are mixed with each other may be supplied by using a separately connected bypass line 336 when a supply amount or a required amount of the basic alkali mixture solution is increased.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkali mixture solution mixing ratio of the basic alkaline solution and water is increased, but the mixing ratio of water may be adjusted in consideration of the cost aspect.

The basic alkali mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water source 332 may include all water that may be easily acquired at a system installation site, and water may be seawater as an example.

An average pH of the basic alkali mixture solution may be at least pH 12. For example, the pH may be pH 12 to pH 13.5, pH 13, pH 12, pH 12.1, pH 12.2, or pH 12.3. The pH of the basic alkali mixture solution may be measured by a pH meter in the absorption column 310, and carbon dioxide cannot be captured anymore when the pH of the basic alkali mixture solution in the absorption column 310 is less than pH 10.5. Therefore, in order to adjust the pH of the basic alkali mixture solution, the basic alkaline solution and water may be supplied to the mixer 330 by adjusting the amount of the basic alkaline solution and the amount of water from zero to 100% by each valve 333 and 334.

When the level of the basic alkali mixture solution in the absorption column 310 is lower than 90% (measured by the level indicator), the input of the basic alkali mixture solution may be adjusted through a valve 335 at the mixer 330 so that the basic alkali mixture solution is input. Furthermore, when the level of the solution reaches 100%, the input of the basic alkali mixture solution may be stopped. At the same time, the basic alkaline solution and water may be mixed until the pH of the basic alkali mixture solution becomes pH 12 to pH 13.5.

Since the amount of basic alkali mixture solution supplied to the absorption column 310 and the amount of a solution discharged from the separator 340 are the same, a carbon dioxide capture system is capable of being continuously maintained. Therefore, the valve 335 (including a bypass valve if necessary) may be adjusted such that the same amount of the basic alkali mixture solution as a value of a flow meter mounted in a line from the absorption column 310 to the separator 340 is supplied to the absorption column 310 so that the net flow is adjusted to zero.

A reaction product containing carbon dioxide captured by reacting the basic alkali mixture solution and carbon dioxide with each other is collected in the carbon dioxide capture part 311 of the absorption column 310, a carbon dioxide reaction product and a waste solution in the reaction product are moved to the separator 340 through a valve 314, and the carbon dioxide reaction product and the waste solution in the reaction product are separated from each other. For example, the separator 340 may be configured to perform the separation by using a centrifugal separation method.

The separated carbon dioxide reaction product contains sodium carbonate (Na₂CO₃) or sodium bicarbonate (NaHCO₃), which is a useful carbon resource, and the separated carbon dioxide reaction product is moved to the carbon resource storage 341. Furthermore, the moved carbon dioxide reaction product may be supplied to the hydrogen generator that will be described later.

In addition, the carbon dioxide reaction product is a compound with high added value and great commercial potential, as the carbon dioxide reaction product is a substance that can be utilized in various industries such as soap, detergent, leather, and food additives.

The reactor 300 is a system used on land, so that a place for storing a carbon dioxide reaction product is capable of being easily secured. Therefore, the carbon dioxide reaction product may be separated and stored in the carbon resource storage so as to utilize the carbon dioxide reaction product into other useful materials.

As described in Formula 2 below, the carbon dioxide reaction product may be formed by reacting a basic alkali mixture solution with carbon dioxide.

<Formula 2> 2NaOH + CO₂ → Na₂CO₃ + H₂O Na₂CO₃ + H₂O + CO₂ → 2NaHCO₃

In the reaction product, a waste solution other than a carbon dioxide reaction product is moved to a wastewater treatment tank 342 and then is discarded. For example, the waste solution may contain illite minerals, water, and so on that are contained in the basic alkali mixture solution that has finished a catalyst function.

A residual flue gas in which carbon dioxide is removed after carbon dioxide is captured in the carbon dioxide capture part 311 is discharged through the discharge part 350. For example, the residual flue gas discharged through the discharge part 350 may include some small amounts of uncaptured carbon dioxide.

At this time, since the concentration of carbon dioxide cannot exceed the regulatory standard value when the residual flue gas is discharged, the residual flue gas that does not exceed a standard (the standard set by a manager after the concentration of carbon dioxide in the atmosphere is measured) may be discharged on the basis of the concentration of carbon dioxide in the atmosphere to which the residual flue gas is discharged.

The reactor 300 may further include: a monitoring part 360 configured to monitor a level and a pH of a basic alkali mixture solution in the absorption column; and a controller 361 configured to adjust a supply amount of the basic alkali mixture solution by the monitoring part 360.

Values of a gas meter, a pH meter, and a flow meter measured in all processes in the reactor 300 are managed in the monitoring part 360, and the controller 361 performs adjustment on the basis of the values represented in the monitoring part 360. The valves 314, 333, 334, and 335 may be adjusted in terms of percentage with respect to values input from the controller 361.

As described above, the reactor 300 according to an embodiment of the present disclosure may reduce carbon dioxide that may have a profound effect on global warming by capturing carbon dioxide that is generated after reforming of a fuel that is input into the fuel cell is performed, and may convert the captured carbon dioxide into sodium carbonate or sodium bicarbonate so that the captured carbon dioxide is utilized as other useful materials.

Meanwhile, referring to FIG. 1 and FIG. 3, the hydrogen generator 400 may receive a separated carbon dioxide reaction product from the reactor 300 and may generate hydrogen by using the carbon dioxide reaction product, and may supply the generated hydrogen to the fuel cell 600. Through this, the power generation efficiency of a fuel cell compared to that of a conventional technology may be increased, and also carbon dioxide may be utilized to the maximum extent.

In order to describe the hydrogen generator 400 in detail, hereinafter, the hydrogen generator 400 will be described with reference to FIG. 3 to FIG. 5.

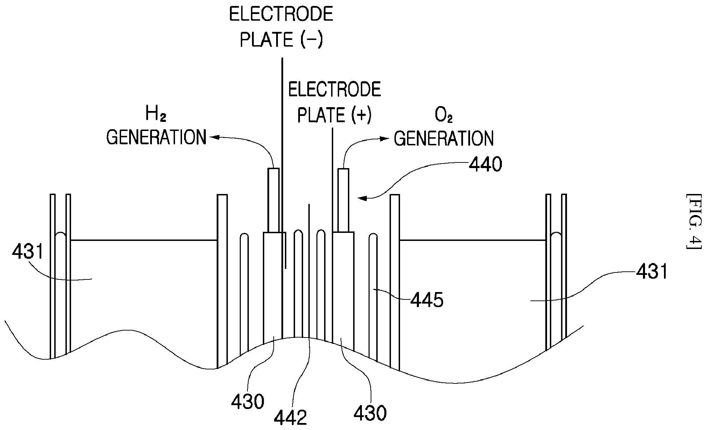

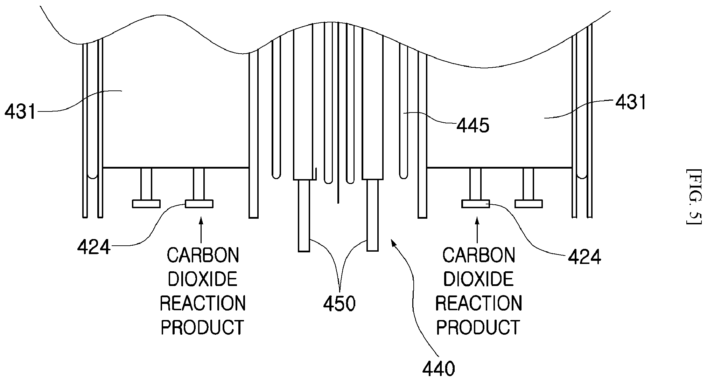

FIG. 3 is a conceptual view illustrating the hydrogen generator 400 according to an embodiment of the present disclosure, FIG. 4 is an enlarged view illustrating the B part illustrated in FIG. 3, and FIG. 5 is an enlarged view illustrating the A part illustrated in FIG. 3.

As illustrated in FIG. 3 to FIG. 5, the hydrogen generator 400 may include: a carbon dioxide reaction product supply tank 431 for supplying sodium carbonate (Na₂CO₃) or sodium bicarbonate (NaHCO₃), each being a carbon dioxide reaction product separated from the reactor (see reference numeral 300 in FIG. 1); a water electrolysis cell 440 configured to generate hydrogen gas and oxygen gas through electrolysis by using sodium carbonate (Na₂CO₃) or sodium bicarbonate (NaHCO₃) supplied from the carbon dioxide reaction product supply tank 431 as an electrolyte for the electrolysis; and a power application part 410 and an inverter 420 for applying a current to the water electrolysis cell 440.

The carbon dioxide reaction product supply tank 431 receives sodium carbonate (Na₂CO₃) or sodium bicarbonate (NaHCO₃) through a carbon dioxide reaction product inlet flow path 422 and stores sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reaction product separated from the reactor 300. Furthermore, the carbon dioxide reaction product supply tank 431 may be provided with a carbon dioxide reaction product inlet port 424 connected to an electrolyte supply flow path 432 configured to supply the carbon dioxide reaction product stored in the carbon dioxide reaction product supply tank 431 to the water electrolysis cell 440.

In the carbon dioxide reaction product supply tank 431 may be provided with a pump for pumping sodium carbonate (Na₂CO₃) or sodium bicarbonate (NaHCO₃) being an electrolyte for the electrolysis performed by the hydrogen generator 400.

As illustrated in FIG. 4 and FIG. 5, the water electrolysis cell 440 may include: a negative electrode (-) plate and a positive electrode (+) plate; a diaphragm 442 that is an electrolyte membrane disposed between the negative electrode plate and the positive electrode plate; a pair of electrolyzers 430 which accommodates the carbon dioxide reaction product supplied from the carbon dioxide reaction product supply tank 431 and which is connected to a hydrogen storage tank 485 and an oxygen storage tank 490; a gas discharge part configured to discharge hydrogen gas and oxygen gas that are generated by electrolyzing the carbon dioxide reaction product in the electrolyzers 430; and a drain 450 for discharging an ion material that has not been reacted by electrolysis.

Preferably, in order to prevent the carbon dioxide reaction product stored in the carbon dioxide reaction product supply tank 431 from being in contact with the electrode plates, a packing 445 formed as a non-conductor and a control part (not illustrated) capable of selectively controlling whether the carbon dioxide reaction product inlet flow path 422 is opened or closed by using power of the power application part 410 may further be provided.

As in the following Formula 3, in a state in which the electrode plates at both sides are supplied with sodium carbonate (Na₂CO₃) or sodium bicarbonate (NaHCO₃) being the electrolyte in the present disclosure, the water electrolysis cell 440 generates hydrogen gas (H₂) and oxygen gas (O₂) as power is applied to the water electrolysis cell 440 by the power application part 410 and the inverter 420 through a DC busbar 421.
<Formula 3>

Reduction electrode (negative electrode) reaction: Na₂CO₃+ CO₂+ 2H₂O + 2e⁻ → 2NaOH+ 2CO₂+ 2OH⁻ + H₂ 2NaHCO₃ + 2e⁻ → 2NaOH+ 2CO₂+ 2OH⁻ + H₂

Oxidation electrode (positive electrode) reaction: Na₂CO₃+ CO₂+ H₂O - 2e⁻ → 2NaOH+ 2CO₂+ 2H⁺ + O₂ 2NaHCO₃ - 2e⁻ → 2NaOH+ 2CO₂+ 2H⁺ + O₂

That is, at this time, sodium carbonate (Na₂CO₃) or sodium bicarbonate (2NaHCO₃), which is an electrolyte supplied to the water electrolysis cell 440, dissociates on a surface of the negative electrode plate and discharges hydrogen gas, and oxygen gas is discharged on the positive electrode plate as oxygen ions move through the diaphragm that is the electrolyte membrane. Here, the ion material that has not been reacted in Formula 3 may be transferred to a sludge recovery part 500 of the hydrogen generator 400 through the drain 450.

Through the process described above, hydrogen gas discharged from the water electrolysis cell 440 is discharged through a hydrogen discharge flow path 470 and passes through a filter and a compressor, so that high purity hydrogen gas is stored in the hydrogen storage tank 485. Furthermore, the stored hydrogen gas is supplied to the fuel cell (see reference numeral 600 in FIG. 1), thereby being capable of increasing the power generation efficiency.

Similarly, oxygen gas discharged from the water electrolysis cell 440 is discharged through an oxygen discharge flow path 475 and passes through a filter and a compressor, so that high purity oxygen gas may be stored in the oxygen storage tank 490.

Meanwhile, in a cathode of a conventional water electrolysis technology that uses water as an electrolyte, OH- radical is generated as a reaction product during a reduction process, and water (H₂O) is generated since OH- radical easily recombines with oxygen (O₂) generated through oxidation at an anode and hydrogen (H₂) generated through reduction at the cathode, so that there is a problem the hydrogen (H₂) generation efficiency is reduced as a result.

However, in the present disclosure, sodium carbonate(Na₂CO₃) or sodium bicarbonate (NaHCO₃), which is a carbon dioxide reaction product, is used as an electrolyte for electrolysis. Therefore, the recombination of the dissociated OH- radical with hydrogen (H₂) and oxygen (O₂) in the conventional water electrolysis technology is prevented by sodium carbonate(Na₂CO₃) or sodium bicarbonate (NaHCO₃) being a carbon dioxide reaction product, so that the hydrogen (H₂) generation efficiency may be increased as a result. In addition, in the present disclosure, since Na⁺ ions are dissociated through a water electrolysis reaction, the hydrogen (H₂) gas generation amount may be increased due to an increase in electrical conductivity, so that there is an effect that a problem of the conventional technology is capable of being solved.

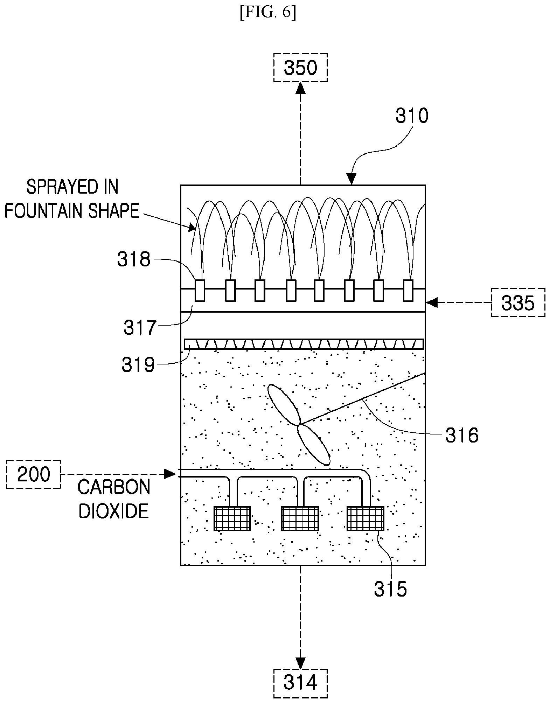

FIG. 6 is a schematic view illustrating an inner portion of an absorption column of the reactor according to another embodiment of the present disclosure.

Referring to FIG. 6, in the configuration of the absorption column of the reactor according to another embodiment of the present disclosure, in addition to the configuration according to an embodiment illustrated in FIG. 2, a detailed configuration for promoting a reaction between carbon dioxide and the basic alkali mixture solution may be added.

In the absorption column 310 according to another embodiment, carbon dioxide transferred from the hydrocarbon reformer 200 passes through a mesh net 315 mounted on the lower portion of the absorption column 310, and is atomized into micro bubbles.

In addition, the basic alkali mixture solution supplied to the inside of the absorption column 310 from the mixer (see reference numeral 330 in FIG. 2) through a pipe 317 is sprayed upwardly as a fountain shape through a plurality of nozzles 318 mounted on a first side of the pipe 317 by being spaced apart from each other at a predetermined distance, and then is atomized into micro droplets, the pipe 317 being mounted such that the pipe 317 crosses the upper portion of the absorption column 310

In addition, a micro droplet screen 319 may be further provided between the mesh net 315 and the pipe 317 so as to allow micro droplets in the atomized basic alkali mixture solution having a size smaller than a predetermined size to pass therethrough.

As previously described in an embodiment in FIG. 2, micro bubbles and micro droplets generated by the mesh net 315 and the micro droplet screen 319 may increase a reaction surface area between carbon dioxide and the alkaline solution as the size of the micro bubbles and micro droplets decrease, thereby being capable of increasing the carbon dioxide capture performance. For example, the micro bubbles and the micro droplets may have a size of about 50 *µ*m or less.

Then, as described above, the basic alkali mixture solution atomized into the micro droplets actively captures carbon dioxide as the reaction is promoted through contact with the atomized carbon dioxide which has been atomized by the mesh net 315.

In addition, an agitator 316 for promoting the reaction by increasing the fluidity of the atomized carbon dioxide and the atomized basic alkali mixture solution may further be provided between the mesh 315 and the pipe 317.

The agitator 316 may further promote a reaction between the two materials by increasing the retention time and the contact time of the atomized basic alkali mixture solution and the atomized carbon dioxide by being rotated in the manner of a propeller.

As described above, according to the structure and the operation of the present disclosure, carbon dioxide is efficiently reduced by reforming the hydrocarbon from boil-off gas generated from liquefied natural gas, the hydrocarbon being one of the greenhouse gases. At the same time, the generated hydrogen is supplied to the fuel cell to produce electricity, and the generated carbon dioxide reaction product may be converted into other useful materials for resource utilization.

In addition, according to the structure and the operation of the present disclosure, since the carbon dioxide reaction product that is a useful material is utilized so that hydrogen (H₂) is generated and then the generated hydrogen (H₂) is supplied to the fuel cell again, the power generation efficiency of the fuel cell is capable of being increased.

In addition, according to the configuration and the operation of the present disclosure, in addition to hydrogen (H₂), chlorine (Cl₂) and caustic soda (NaOH) are also generated, and sodium hypochlorite (NaClO) is generated by reacting chlorine (Cl₂) and caustic soda (NaOH) that are generated, so that there is an advantage that the additional potential revenue generation may be expected.

So far, the carbon dioxide capture and carbon resource utilization system, for the fuel cell, using boil-off gas generated from liquefied natural gas have been described with reference to exemplary embodiments.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

The present disclosure may be widely used in the field of carbon dioxide capture and carbon resource utilization system, for a fuel cell, using boil-off gas generated from liquefied natural gas.

## Claims

1. A carbon dioxide capture and carbon resource utilization system, for a fuel cell, using boil-off gas (BOG) generated from liquefied natural gas, the system comprising:
a liquefied natural gas storage configured to store liquefied natural gas (LNG);
a hydrocarbon reformer configured to react boil-off gas generated from liquefied natural gas storage with water input from outside, thereby generating a gas mixture containing hydrogen and carbon dioxide;
a fuel cell configured to generate electric power by receiving hydrogen generated from the hydrocarbon reformer;
a reactor configured to capture carbon dioxide by receiving carbon dioxide generated from the hydrocarbon reformer and reacting carbon dioxide with a basic alkali mixture solution, configured to collect a reaction product containing the captured carbon dioxide, and configured to separate a carbon dioxide reaction product and a waste solution from the reaction product; and
a hydrogen generator configured to generate hydrogen by using the carbon dioxide reaction product separated from the reactor and configured to supply the generated hydrogen to the fuel cell.

2. The system of claim 1, wherein a hydrogen charging station for transmitting and storing hydrogen that remains after being supplied to the fuel cell is further provided between the hydrocarbon reformer and the hydrogen generator.

3. The system of claim 1, wherein the hydrocarbon reformer comprises:
an extraction mechanism for extracting or separating hydrogen and carbon dioxide from the gas mixture; and
a transfer mechanism for supplying hydrogen extracted from the extraction mechanism to the fuel cell and for supplying carbon dioxide separated from hydrogen from the generated gas mixture to the reactor.

4. The system of claim 1, wherein the reactor comprises:
a mixer configured to supply the basic alkali mixture solution;
an absorption column configured to capture carbon dioxide by reacting the basic alkali mixture solution supplied from the mixer with carbon dioxide transferred from the hydrocarbon reformer;
a separator configured to collect the reaction product containing carbon dioxide captured in the absorption column and configured to separate the carbon dioxide reaction product and the waste solution from the reaction product; and
a carbon resource storage configured to store the separated carbon dioxide reaction product for utilizing the separated carbon dioxide reaction product.

5. The system of claim 4, wherein the mixer is configured to generate the basic alkali mixture solution by mixing a basic alkaline solution supplied from a basic alkaline solution storage with water supplied from a water source.

6. The system of claim 5, wherein the basic alkaline solution and water are mixed in a ratio of 1:1 to 1:5.

7. The system of claim 1, wherein an average pH of the basic alkali mixture solution is pH 12 to pH 13.5.

8. The system of claim 1, wherein the basic alkali mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

9. The system of claim 4, wherein the absorption column is configured to supply the basic alkali mixture solution from the mixer by using a plurality of nozzles mounted on an upper portion of the absorption column.

10. The system of claim 4, wherein the basic alkali mixture solution is input by being adjusted through a valve in the mixer when a level of the basic alkali mixture solution in the absorption column is lowered to less than 90%, and inputting of the basic alkali mixture solution is stopped and, at the same time, a basic alkaline solution and water are mixed until a pH of the basic alkali mixture solution becomes pH 12 to pH 13.5 when the level of the basic alkali mixture solution becomes 100%.

11. The system of claim 4, wherein the absorption column is configured to capture carbon dioxide by reacting the basic alkali mixture solution supplied from the mixer with carbon dioxide which is transferred from the hydrocarbon reformer and in which micro bubbles are formed by allowing carbon dioxide to pass through a bubbler formed on a lower portion of the absorption column.

12. The system of claim 9, wherein, in the absorption column, carbon dioxide transferred from the hydrocarbon reformer is atomized into micro bubbles by passing through a mesh net mounted on a lower portion of the absorption column, the basic alkali mixture solution supplied inside the absorption column from the mixer through a pipe is sprayed upwardly as a fountain shape through the plurality of nozzles which is mounted on a first side of the pipe and which is disposed to be spaced apart from each other at a predetermined distance and then the basic alkali mixture solution is atomized into micro droplets, and carbon dioxide is captured as the basic alkali mixture solution that is atomized reacts with carbon dioxide that is atomized, the pipe being mounted such that the pipe crosses the upper portion of the absorption column.

13. The system of claim 12, wherein an agitator for promoting a reaction between carbon dioxide and the basic alkali mixture solution by increasing fluidity of the atomized carbon dioxide and the atomized basic alkali mixture solution is further provided between the mesh net and the pipe.

14. The system of claim 12, wherein a micro droplet screen for allowing micro droplets in the atomized basic alkali mixture solution having a size smaller than a predetermined size to pass therethrough is further provided between the mesh net and the pipe.

15. The system of claim 4, wherein the reactor comprises:
a monitoring part configured to monitor a level and a pH of the basic alkali mixture solution in the absorption column; and
a controller configured to adjust a supply amount of the basic alkali mixture solution by the monitoring part.

16. The system of claim 1, wherein the carbon dioxide reaction product comprises sodium carbonate (Na₂CO₃) or sodium bicarbonate (NaHCO₃).

17. The system of claim 1, wherein the hydrogen generator comprises a water electrolysis cell configured to generate hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reaction product separated from the reactor.
